# EUROPÄISCHE PATENTANMELDUNG

(11) **EP 1 688 242 A2**
(43) Veröffentlichungstag der Anmeldung: **09.08.2006**
(21) Anmeldenummer: 06002042.7
(22) Anmeldetag: 01.02.2006
(51) Int. Cl.: B30B 9/30, B29B 17/00

(54) **Verfahren und Vorrichtung zum Verdichten von Materialien**

(30) Priorität: 02.02.2005 DE 202005001579 U; 07.09.2005 DE 202005014151 U
(71) Anmelder: Strautmannn Maschinenbau GmbH, 49219 Glandorf (DE)
(72) Erfinder: Strautmann Wolfgang, 49196 Bad Laer (DE)
(74) Vertreter: Linnemann, Winfried

(57) **Zusammenfassung**

Die Erfindung betrifft ein Verfahren zum Verdichten von Materialien (11), insbesondere recycelfähigen Reststoffen.

Das erfindungsgemäße Verfahren ist gekennzeichnet durch die folgenden Verfahrensschritte:
a) das zu verdichtende Material (11) wird unter einer ersten Vorverdichtung in einen Vorverdichtungsraum gefördert,
b) das Material (11) wird im Vorverdichtungsraum radial in Richtung von außen nach innen weiter vorverdichtet,
c) das vorverdichtete Material (11) wird in axialer Richtung in einen Endverdichtungsraum gefördert,
d) das vorverdichtete Material (11) wird im Endverdichtungsraum in axialer Richtung endverdichtet und
e) das endverdichtete Material (11) wird aus dem Endverdichtungsraum ausgetragen.

Weiter betrifft die Erfindung eine Vorrichtung (1) zum Verdichten von Materialien (11).

## Beschreibung

Die vorliegende Erfindung betrifft ein Verfahren zum Verdichten von Materialien. Weiter betrifft die Erfindung eine Vorrichtung zum Verdichten von Materialien, insbesondere recycelfähigen Reststoffen, mit einer drehantreibbaren, in einem Schneckenrohr gelagerten hohlen Förderschnecke, wobei das Schneckenrohr einen offenen Eingabebereich für zu verdichtende Materialien und in Förderrichtung daran anschließend einen geschlossenen Schnekkenrohrabschnitt aufweist, wobei ein in Förderrichtung hinter dem Schneckenrohr liegenden Preßkanal vorgesehen ist und wobei in der Förderschnecke ein in deren Längsrichtung verfahrbares, in den Preßkanal und zurück bewegbares Preßwerkzeug geführt ist.

Eine Vorrichtung der vorstehend genannten Art ist aus DE-A-34 22 658 bekannt. Bei dieser bekannten Vorrichtung mündet die hier als Einzugsverdichtungsschnecke dienende Förderschnecke in einen Kegelmantel. Die Schnecke sorgt hier gleichzeitig für eine Förderung der zu verdichtenden Materialien und für eine Vorverdichtung innerhalb des Kegelmantels, in welchem der Außendurchmesser der Schnecke stetig kleiner wird. Hierdurch wird das Volumen für das zu verdichtende Material kleiner, wodurch die Vorverdichtung erzielt wird. In Förderrichtung hinter dem Kegelmantel liegt der Preßkanal, in den das innerhalb der Schnekke geführte Preßwerkzeug hinein bewegbar ist, um das zu verdichtende Material weiter zu pressen und dessen Endverdichtung zu erreichen. In einer alternativen Ausführung dieser bekannten Vorrichtung wird anstelle eines in der Schnecke geführten Preßwerkzeuges eine Anzahl von unter einem spitzen Winkel in den Preßkanal abwechselnd einfahrbaren Preßwerkzeugen verwendet, womit eine Art von Stampfen des zu verdichtenden Materials bewirkt wird.

Nachteilig ist bei dieser bekannten Vorrichtung, daß die Förderschnecke durch die von ihr bewirkte Vorverdichtung des Materials im Kegelmantel einer erheblichen Belastung unterliegt und mit einer hohen Antriebskraft angetrieben werden muß, damit sie die nötige Vorverdichtungsarbeit aufbringen kann. Dieses führt zu einem hohen mechanischen Aufwand für Antrieb und Lagerung der Schnecke und außerdem zu einem relativ hohen Verschleiß an der Schnecke, was zu einem erhöhten Wartungs- und Reparaturaufwand führt.

Für die vorliegende Erfindung stellt sich deshalb die Aufgabe, ein Verfahren zum Verdichten von Materialien und eine Vorrichtung für den gleichen Zweck anzugeben, wobei die verdichtungsarbeit so aufgebracht wird, daß bei hoher Enddichte keine hohen Belastungen auftreten und daß die entsprechende Vorrichtung verschleißarm und zuverlässig und bei einem guten Verdichtungsgrad arbeitet.

Die Lösung des das Verfahren betreffenden Teils der Aufgabe gelingt erfindungsgemäß mit einem Verfahren gemäß dem Patentanspruch 1.

Während im bekannten Stand der Technik die Verdichtung des zu verdichtenden Materials in nur zwei Schritten bewirkt wird, wendet das erfindungsgemäße Verfahren dafür vorteilhaft drei aufeinanderfolgende Schritte an, wodurch die aufzubringenden Kräfte in den einzelnen Schritten zu Erzielung der gleichen Endverdichtung verkleinert werden. Außerdem werden unterschiedliche Verdichtungerichtungen miteinander kombiniert, nämlich im Schritt b) eine Verdichtung radial nach innen und im Schritt d) eine Endverdichtung in axialer Richtung. Damit wird das zu verdichtende Material in allen räumlichen Richtungen mit einer Verdichtungskraft beaufschlagt, wodurch eine besonders hohe Endverdichtung erzielt wird, ohne daß in den einzelnen Verdichtungsschritten ein extrem hoher Kraftaufwand nötig wäre.

Zur Lösung des Teils der Aufgabe, der die Vorrichtung betrifft, wird eine Vorrichtung der eingangs genannten Art vorgeschlagen, die dadurch gekennzeichnet ist,
- daß zwischen dem Schneckenrohr mit der Förderschnecke und dem Preßkanal ein einen Vorpreßraum begrenzendes Zwischenstück angeordnet ist und
- daß am und/oder im Zwischenstück mindestens ein im Sinne einer Verkleinerung des Innendurchmessers des Zwischenstücks verstellbares Verdichtungselement vorgesehen ist.

Mit der erfindungsgemäßen Vorrichtung läßt sich ein zu verdichtendes Material zu einer besonders hohen Enddichte verdichten, wobei die einzelnen, die Verdichtungskraft aufbringenden Teile der Vorrichtung jeweils nur relativ begrenzte Kräfte aufbringen müssen. Hierdurch wird die Verdichtungsarbeit vorteilhaft aufgeteilt, was der Haltbarkeit und Betriebssicherheit der Vorrichtung zu Gute kommt und für einen verminderten Verschleiß der Vorrichtung sorgt. Insbesondere wird die Förderschnecke im Vergleich zu bekannten einschlägigen Vorrichtung von einem großen Teil der verdichtungsarbeit entlastet, weil diese Verdichtungsarbeit in dem erfindungsgemäß zusätzlich vorgesehenen Vorpreßraum von dem mindestens einem zugehörigem Verdichtungselement für eine radiale Verdichtung übernommen wird. Die Endverdichtung erfolgt dann in axialer Richtung im auf den Vorpreßraum in Förderrichtung folgenden Preßkanal. Antrieb und Lagerung sowie die Dimensionierung der Förderschnecke können so verkleinert und dadurch kostengünstiger werden. Dieses wiegt den zusätzlichen Aufwand für den Vorpreßraum und das daran vorgesehene mindestens eine Verdichtungselement zumindest auf, weil der Vorpreßraum und das mindestens eine Verdichtungselement technisch relativ einfach gehalten werden können.

In weiterer Ausgestaltung ist vorgesehen, daß das Schnekkenrohr einen größeren Innendurchmesser als der Preßkanal aufweist und daß für den Übergang vom größeren Innendurchmesser zum kleineren Innendurchmesser das Zwischenstück in seinem Innendurchmesser konisch ausgebildet ist. Allein durch seine konische Form trägt das Zwischenstück schon zu einer wirksamen Vorverdichtung des zu verdichtenden Materials beim Fördern in den Vorpreßraum bei. Außerdem erleichtert diese Formgebung des Zwischenstücke das weitere Vorverdichten des Materials im Zwischenstück in radialer Richtung nach innen hin.

Um eine gleichmäßige Vorverdichtung im Zwischenstück zu erzielen, sind bevorzugt über den Umfang des Zwischenstücks verteilt mehrere Verdichtungselemente vorgesehen.

Vorteilhaft wird weiter vorgeschlagen, daß die Verdichtungselemente in ihrer radial äußeren Endstellung auf oder außerhalb der Kontur des Innendurchmessers des Zwischenstücks liegen und in ihrer radial inneren Endstellung eine dem Innendurchmesser des Preßkanals angenährte oder angepaßte Innenkontur bilden. Hiermit wird insbesondere erreicht, daß die Verdichtungselemente in ihrer radial äußeren Endstellung das Befüllen des im Zwischenstück liegenden vorpreßraums nicht behindern. Durch die angegebene radial innere Endstellung wird das Überführen des vorgepreßten Materials aus dem Zwischenstück in den Preßkanal erleichtert.

Im Sinne einer möglichst einfachen und zugleich stabilen und zuverlässigen Konstruktion sind bevorzugt die verdichtungselemente durch insgesamt radial verstellbare oder radial verschwenkbare Schwerter gebildet.

In weiterer Ausgestaltung sind bevorzugt die Schwerter außerhalb des Zwischenstücks gelagert und durch formangepaßte Schlitze im Mantel des Zwischenstücks hindurch bewegbar. Auf diese Weise wird das Innere des Zwischenstücks vollkommen von Mitteln für die Lagerung und die Verstellung der Schwerter freigehalten; vielmehr können alle diese Teile außerhalb des Zwischenstücks angeordnet werden.

Damit die Verdichtungselemente die von ihnen auf das zu verdichtende Material auszuübende Verdichtungskraft zuverlässig aufbringen können, wird vorgeschlagen, daß das mindestens eine Verdichtungselement durch (je) einen individuellen oder durch einen gemeinsamen, für mehrere Verdichtungselemente vorgesehenen Kraftantrieb verstellbar ist. Bevorzugt ist dabei der Kraftantrieb durch einen oder mehrere hydraulische Kolben-Zylinder-Einheiten gebildet, da diese bei kompakter Bauform ausreichend hohe Kräfte aufbringen können.

Bei der eingangs erläuterten bekannten Vorrichtung liegt der hinsichtlich des Kraftbedarfs des Preßwerkzeuges kritische Punkt an der der Stelle, an der das zu verdichtende Material vom Kegelmantel in den Preßkanal gepreßt werden muß. An dieser Stelle kann es dazu kommen, daß Material, das sich um das Preßwerkzeug herum aufgebaut hat, dazu führt, daß das Preßwerkzeug an dieser Übergangsstelle eingeklemmt wird. Die zur Verfügung stehende Preßkraft muß dann so groß sein, daß sie ausreicht, das um das Preßwerkzeug herum befindliche Material an der Übergangsstelle vom Kegelmantel zum Preßkanal abzuscheren. Da bei der bekannten Vorrichtung an dieser Stelle gleichzeitig schon das Material im Preßkanal zu seiner Enddichte verdichtet wird, kann möglicherweise die Preßkraft des Preßwerkzeuges nicht ausreichen bzw. muß aus Sicherheitsgründen überdimensioniert werden. Diesem Problem hilft die erfindungsgemäße Vorrichtung dadurch ab, daß die Länge des Zwischenstücks und des Preßkanals und der Hub des Preßwerkzeuges so aufeinander abgestimmt sind, daß ein erster Hubabschnitt des Preßwerkzeuges im wesentlichen eine Verschiebung von vorverdichtetem Material aus dem Vorpreßraum in den Preßkanal bewirkt und daß erst ein zweiter, im Preßkanal liegender Hubabschnitt des Preßwerkzeuges im wesentlichen eine Materialendverdichtung im Preßkanal und ein Ausstoßen von endverdichtetem Material aus dem Preßkanal bewirkt. Hierdurch wird erreicht, daß extrem hohe Spitzen im Antriebskraftlaedarf für das Preßwerkzeug vermieden werden, was eine insgesamt leichtere und preisgünstigere Konstruktion des Preßwerkzeuges und seines Antriebes erlaubt.

Zur Erzeilung einer besonders kompakten und platzsparenden Anordnung ist bevorzugt das Preßwerkzeug kolbenartig ausgebildet und durch einen in und/oder axial außerhalb der hohlen Förderschnecke liegenden Kraftantrieb verfahrbar. Auch hier ist der Kraftantrieb bevorzugt durch mindestens eine hydraulische Kolben-Zylinder-Einheit gebildet, die bei geringem Bauraumbedarf in der Lage ist, die erforderlichen Kräfte zuverlässig aufzubringen.

Um einen unerwünschten und die Funktion der Vorrichtung beeinträchtigenden Verschleiß am Außenumfang des Preßwerkzeuges zu vermeiden, schlägt eine Ausführung der Vorrichtung vor, daß in der hohlen drehbaren Förderschnecke ein nichtdrehbares Rohr angeordnet ist und daß das Preßwerkzeug in dem Rohr geführt ist. Zwischen dem Preßwerkzeug und dem Rohr tritt deshalb nur noch eine axiale Relativbewegung auf, während eine rotierende Relativbewegung zwischen dem Rohr und dem Preßwerkzeug nicht auftritt. Hierdurch wird der Verschleiß des Preßwerkzeuges wesentlich verringert, was vorteilhaft dazu führt, daß das Preßwerkzeug seine Kontur über eine lange Betriebszeit behält und daß sich ein vorgegebenes Maß des Preßwerkzeugdurchmessers relativ zum Durchmesser des Preßkanals in der Praxis nur sehr langsam verändert. Dieses erlaubt längere Einsatzzeiten der Vorrichtung ohne Reparaturen oder Austausch von Einzelteilen.

Um insbesondere die Überführung des vorverdichtenden Materials aus dem Vorpreßraum in den Preßkanal zu erleichtern, kann das Preßwerkzeug mit einer dem zu verdichtenden Material zugewandten Stirnfläche ausgebildet sein, die wenigstens eine konzentrische, radial von außen nach innen ansteigende Stufe aufweist. Auf diese Weise werden die beim Überführen des vorverdichtenden Materials aus dem Vorpreßraum in den Preßkanal auftretenden Kraftspitzen über einen längeren Hubbereich des Preßwerkzeuges verteilt, was dieses und dessen Antrieb entlastet und eine geringere maximale Leistung erfordert.

Eine weitere Ausgestaltung der erfindungsgemäßen Vorrichtung sieht vor, daß zumindest ein dem zu verdichtenden Material zugewandter Teil des Preßwerkzeugs mit dem übrigen Preßwerkzeug lösbar verbunden und austauschbar ist. Auf diese Weise kann die Vorrichtung mit geringem Aufwand an unterschiedliche zu verdichtende Materialien angepaßt werden. Die Verbindung zwischen dem austauschbaren Teil des Preßwerkzeuges und dem übrigen Preßwerkzeug ist vorzugsweise eine Schraubverbindung.

Weiterhin besteht erfindungsgemäß die vorteilhafte Möglichkeit, daß das Preßwerkzeug mit einem Hilfswerkzeug ausgestattet ist, das relativ zum übrigen Preßwerkzeug aus diesem heraus in Förderrichtung und zurück verfahrbar ist. Mit diesem Hilfswerkzeug kann die Arbeit des Preßwerkzeuges unterstützt und erleichtert werden, was Störungen bei der Materialförderung im Betrieb der Vorrichtung vermindert oder, wenn sie schon aufgetreten sind, beheben kann.

Bevorzugt ist das Hilfswerkzeug ein konzentrisch im Preßwerkzeug angeordneter und geführter, mit einem eigenen Kraftantrieb ausgestattete Kolben, dessen Außendurchmesser kleiner ist als der Außendurchmesser des Preßwerkzeuges. Damit wird insbesondere erreicht, daß das Hilfswerkzeug leichter beispielsweise einen Teil des vorverdichteten Materials aus dem Vorpreßraum in den Preßkanal befördern kann, wonach dann nac einem Zurückziehen des Hilfswerkzeuges das gesamte Preßwerkzeug ausgefahren wird, um weiteres Material in den Preßkanal zu befördern. Durch diese Unterteilung des Überführens von Material wird auch der hierfür benötigte Kraftaufwand verteilt und dadurch der Spitzenbedarf an Kraft reduziert.

Um für das jeweils zu verdichtende Material eine gewünschte Enddichte zuverlässig zu erzielen, ist zweckmäßig in Förderrichtung gesehen am Ende des Preßkanals ein verstellbares Organ angeordnet, mit dem der Querschnitt des Preßkanals wahlweise verkleinerbar oder absperrbar oder freigebbar ist. Bei verkleinertem oder abgesperrtem Querschnitt des Preßkanals kann das Material im Preßkanal verdichtet werden, ohne daß es bei dem Preßvorgang nachgeben kann. Bei freigegebenem Querschnitt des Freßkanals kann das endverdichtete Material aus dem Preßkanal ausgeschoben werden. Bevorzugt ist dabei das Organ mit einer im Sinne einer Verkleinerung des Querschnitts des Preßkanals wirkenden, vorzugsweise einstellbaren Kraft vorbelastet, wobei dann das Öffnen des Organs gegen diese Vorbelastungskraft durch das gepreßte Material mit Hilfe des Preßwerkzeuges und seines Kraftantriebes erfolgt.

Im folgenden werden Ausführungsbeispiele der Erfindung erläutert. Die Figuren der Zeichnungen zeigen:
- Figur 1:: eine Vorrichtung in eine erste Ausführung im Längsschnitt,
- Figur 2:: die Vorrichtung aus Figur 1 in Draufsicht,
- Figur 3:: die Vorrichtung aus Figur 1 und 2 in Stirnansicht auf die in Figur 1 und 2 linke Seite,
- Figur 4:: die Vorrichtung aus den Figuren 1 bis 3 im Längsschnitt in einem veränderten Betriebszustand,
- Figur 5:: die Vorrichtung in einer geänderten Ausführung im Längsschnitt zusammen mit einem vergrößerten Detail,
- Figur 6:: ein Zwischenstück der Vorrichtung in vergrößerter Einzeldarstellung im Längsschnitt,
- Figur 7:: das Zwischenstück in einer geänderten Ausführung in Seitenansicht,
- Figur 8:: das Zwischenstück aus Figur 7 in einer perspektivischen Ansicht,
- Figur 9:: die Vorrichtung in einer weiteren Ausführung im Längsschnitt und
- Figur 10:: einen Ausschnitt aus der Vorrichtung gemäß Figur 9 in vergrößerter Darstellung, ebenfalls im Längsschnitt.

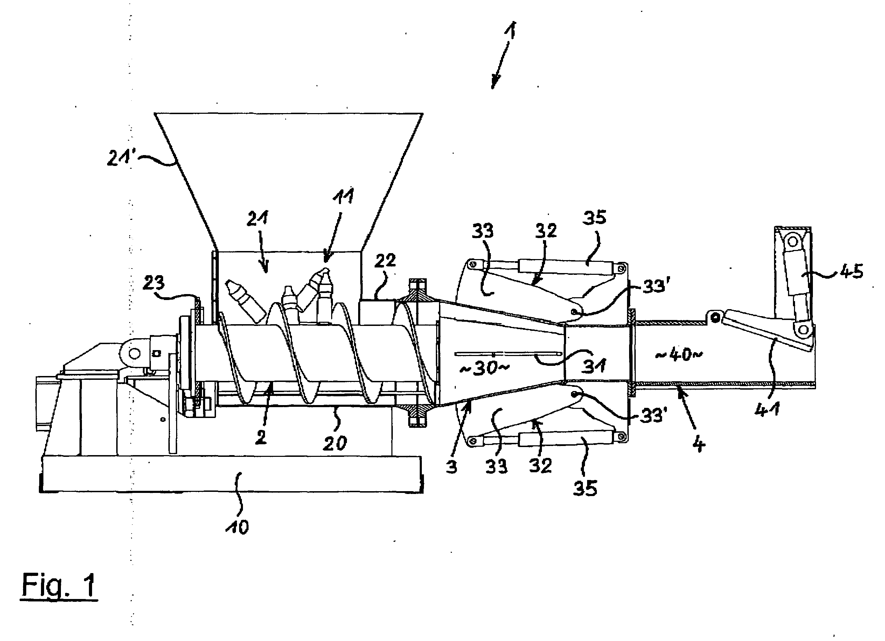

Figur 1 zeigt ein ersten Beispiel einer Vorrichtung 1 zum Verdichten von Materialien 11, insbesondere recycelfähigen Reststoffen, wie hier dargestellt beispielsweise leere Kunststoffflaschen. Die Vorrichtung 1 umfaßt dabei drei wesentliche Teile, nämlich eine Förderschnecke 2, ein Zwischenstück 3 mit einem Vorpreßraum 30 und ein Preßrohr 4 mit einem Preßkanal 40.

Die Förderschnecke 2 ist drehantreibbar in einem Schnekkenrohr 20 angeordnet und gelagert. Der Antrieb erfolgt über einen hier nicht sichtbaren Motor, vorzugsweise Elektromotor, der mittels Riemen oder Kette ein Antriebsrad 23, z.B. ein Kettenrad oder eine Keilriemenscheibe, in Drehung versetzt. Das Antriebsrad oder die Keilriemenscheibe 23 ist verdrehfest mit der Förderschnecke 2 verbunden.

In einem am Anfang, d.h. in Figur 1 links liegenden Bereich der Förderschnecke 2 ist das Schneckenrohr 20 nach oben hin geöffnet und bildet so einen Eingabebereich 21 für die zu verdichtenden Materialien 11. Für eine vereinfachte Eingabe ist über dem Eingabebereich 21 ein Trichter 21' angebracht.

In Förderrichtung der Förderschnecke 2 gesehen, d. h. gemäß Figur 1 nach rechts hin, schließt sich ein geschlossener Abschnitt 22 des Schneckenrohrs 20 an.

Die Förderschnecke 2 mit ihrem Schneckenrohr 20, dem Trichter 21' und dem zugehörigen Antrieb ist auf einem tragenden Rahmen 10 angeordnet.

An das in Förderrichtung gesehen hintere, d.h. gemäß Figur 1 rechts liegende Ende des Schneckenrohrs 20 ist das Zwischenstück 3 angeflanscht. Das Zwischenstück 3 hat eine konische Kontur und wird in seinem Durchmesser in Förderrichtung gesehen, d. h. von links nach rechts, kleiner.

Das Zwischenstück 3 schließt damit einen konischen Vorpreßraum 30 ein. Dem Zwischenstück 3 sind mehrere, hier insgesamt vier Verdichtungselemente 32 zugeordnet. Jedes. Verdichtungselement hat die Form eines um je ein Lager 33' verschwenkbaren Schwertes 33. Zum Verschwenken der Schwerter 33 dienen jeweils zugeordnete Kraftantriebe 35 in Form von hydraulischen Kolben-Zylinder-Einheiten.

Im Zwischenstück 3 sind zu den Schwertern 33 passende Schlitze 31 vorgesehen, durch die hindurch die Schwerter 33 mittels Betätigung der Kraftantriebe 35 in Radialrichtung in den vorpreßraum 30 einschwenkbar sind. In dem in Figur 1 gezeigten Zustand sind die Schwerter 33 in ihre äußere Endstellung verschwenkt, wobei sie mit ihrer radial nach innen weisenden Kante genau auf der Kontur des Zwischenstücks bzw. des Vorpreßraums 30 liegen, also nicht in den Vorpreßraum 30 hineinragen. Aus dieser Stellung sind die Schwerter 33 in Radialrichtung nach innen verschwenkbar.

Weiter in Förderrichtung, d.h. in Figur 1 nach rechts, schließt sich an das Zwischenstück 3 das zylindrische Preßrohr 4 an, das den Preßkanal 40 bildet. Am in Förderrichtung gesehen hinteren Ende, d.h. gemäß Figur 1 ganz rechts, ist am Preßrohr 4 ein verstellbares Organ 41 in Form ein schwenkbaren Platte angelenkt. Zur Verschwenkung des Organs 41 dient eine weitere Kolben-Zylinder-Einheit 45. Hiermit ist das verstellbare Organ 41 zwischen einer in Figur 1 sichtbaren Bremsstellung, in der es im Inneren des Preßkanals 40 liegt und dessen Querschnitt wesentlich verkleinert, sowie einer in der zylindrischen Kontur des Preßkanals 40 liegenden Freigabestellung verstellbar.

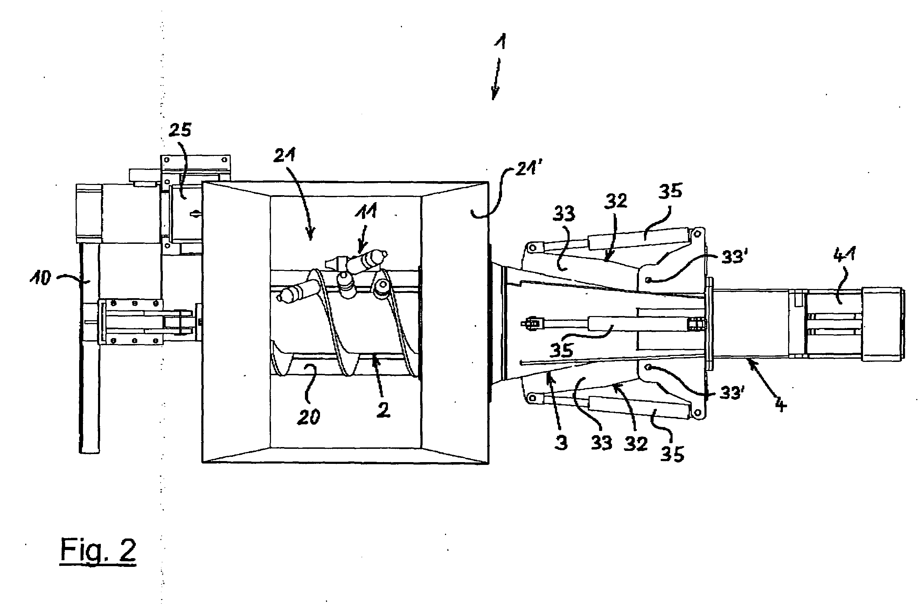

Figur 2 zeigt die Vorrichtung 1 aus Figur 1 in Draufsicht. Bei dieser Blickrichtung ist dem Betrachter der Eingabebereich 21 mit dem Trichter 21' und der darunter liegenden Förderschnecke 2 in ihrem Schneckenrohr 20 zugewandt. Links vom dem Trichter 21' ist ein Teil, des Rahmens 10 sowie ein Teil eines Antriebsmotors 25 für den Drehantrieb der Förderschnecke 2 sichtbar.

Rechts vom Trichter 21' ist das Zwischenstück 3 sichtbar, an dem gleichmäßig über dem Umfang verteilt die insgesamt vier Verdichtungselemente 32 in Form der Schwerter 33 angeordnet sind. Jedes Schwert 33 ist-in einem-Schwenklager 33' gelagert und mittels je eines zugeordneten Kraftantriebes 35 in Radialrichtung nach innen und außen verschwenkbar.

Weiter nach rechts folgt dann das Preßrohr 4 mit dem verstellbaren Organ 41.

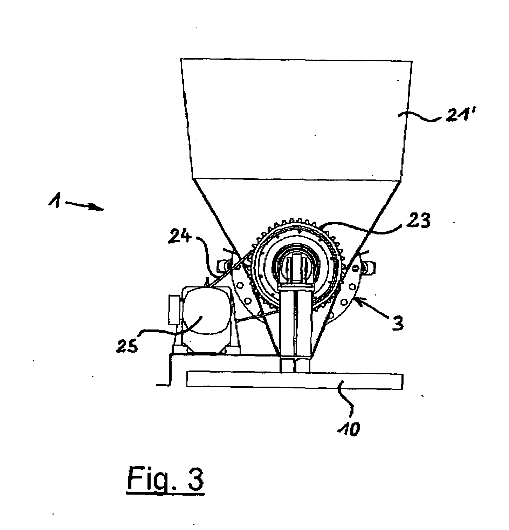

Figur 3 zeigt die Vorrichtung 1 gemäß Figur 1 und 2 in Stirnansicht auf die in den Figuren 1 und 2 linke Seite. Im unteren Teil der Figur 3 ist ein Teil des Rahmens 10 erkennbar. Oberhalb des Rahmens 10 liegt der Trichter 21'. Vor dem Trichter 21' ist das Kettenrad 23 für den Antrieb der hier nicht sichtbaren Förderschnecke erkennbar. Links von dem Kettenrad 23 liegt der Motor 25, der über eine Kette 24 mit dem Kettenrad 23 und der Förderschnecke 2 antriebsmäßig verbunden ist.

Hinter dem unteren Teil des Trichters 21' ist noch ein kleiner Teil des Zwischenstücks 3 erkennbar.

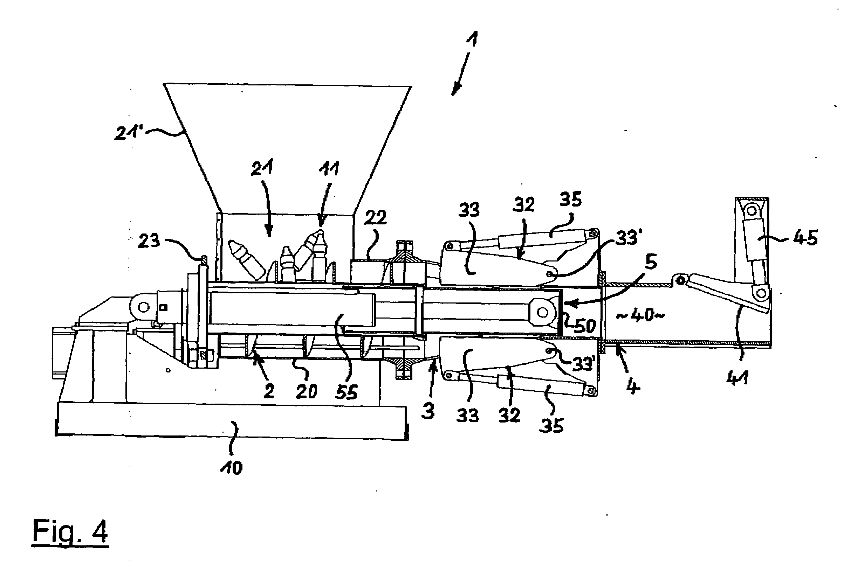

Figur 4 zeigt die Vorrichtung gemäß den Figuren 1 bis 3 wieder im Längsschnitt, nun während des Verdichtens von Materialien.

Die zu verdichtenden Materialien 11 werden durch den Trichter 21' dem Eingabebereich 21 der Förderschnecke 2 zugeführt. Durch Drehung der Förderschnecke 2 werden die Materialien 11 in Förderrichtung, d.h. gemäß Figur 4 nach rechts, in den im Inneren des Zwischenstücks 3 liegenden Vorpreßraum 30 gefördert. Während dieses Fördervorganges haben die Verdichtungselemente 32 die in Figur 1 gezeigte und beschriebene, nach außen verschwenkte Stellung. Damit können die Materialien 11 von der Förderschnecke 2 unbehindert in den Vorpreßraum 3 transportiert werden.

Sobald der Vorpreßraum 3 mit zu verdichtenden Materialien 11 soweit gefüllt ist, daß die Förderschnecke 2 keine weiteren Materialien 11 mehr in den Vorpreßraum 30 hineinfördert, werden die Verdichtungselemente 32 durch Betätigung ihrer zugeordneten Kraftantriebe 35 in Radialrichtung nach innen verschwenkt. Die radial inneren Kanten der Schwerter 33 werden auf diese Weise in Radialrichtung aufeinander zu bewegt, wodurch die im Vorpreßraum 30 befindlichen Materialien 11 eine Verdichtung in Radialrichtung von außen nach innen erfahren.

Dabei liegen die radial inneren Kanten der Schwerter 33 in deren radial innerer Endstellung auf einer etwa zylindrischen Umfangskontur, die dem Innendurchmesser des nachfolgenden Preßkanals 40 weitestgehend entspricht.

In dieser Stellung der Schwerter 33 kommt ein Preßwerkzeug 5 zum Einsatz, das in der hohlen Förderschnecke 2 gelagert und geführt ist. In seiner eingefahrenen Stellung liegt das Preßwerkzeug 5 vollständig im Inneren der hohlen Förderschnecke 2, ragt also nicht über dessen in Förderrichtung, d. h. gemäß Figur 4 rechts, liegendes Stirnende hinaus. Das Preßwerkzeug 5 ist kolbenartig ausgebildet und mittels eines eigenen Kraftantriebes 55, der ebenfalls zum größten Teil im hohlen Inneren der Förderschnecke 2 angeordnet ist, in Axialrichtung ausfahrbar und zurückfahrbar.

In dem in Figur 4 gezeigten Betriebezustand ist das Preßwerkzeug 5 teilweise ausgefahren, wobei seine Stirnseite 50 in einem Übergangsbereich vom konischen Vorpreßraum 30 zum anschließenden zylindrischen Preßkanal 40 liegt. Ausgehend von seiner zurückgefahrenen Stellung schiebt das Preßwerkzeug 5 bei seiner Betätigung das im Vorpreßraum 30 vorverdichtete Paket von Materialien 11 in axialer Richtung in den Preßkanal 40. Dieser Zustand ist in Figur 4 gezeigt. Durch weiteres Ausfahren des Preßwerkzeugs 5 erfolgt im Preßrohr 4 die Endverdichtung der Materialien 11 zu einem kompakten Preßkörper. Während dieses Endverdichtens befindet sich das verstellbare Organ 41 in seiner Sperrstellung, wie es.in Figur 4 gezeigt ist. Das Organ 41 wirkt bei laufender Endverdichtung auf das Material im Preßkanal und hält dieses solange zurück, bis der Druck im Kraftantrieb 55 des Preßwerkzeuges 5 einen vorgebbaren, einstellbaren Maximalwert erreicht; dann gibt das Organ 41 den Vorschub bzw. Ausstoß des endverdichteten Materials frei. Das Verstellen des Organs 41 im Öffnungseinn erfolgt dabei durch die vom Preßwerkzeug 5 und dessen Kraftantrieb 55 aufgebrachte Preßkraft gegen eine durch die Kolben-Zylinder-Einheit 41 aufgebrachte, vorgebbare Kraft, die in Sperr- oder Schließrichtung auf das Organ 41 wirkt. Das endverdichtete Material wird dann als Strangbrikett ausgestoßen. Wenn der Preßhub abgeschlossen ist und der Druck im Kraftantrieb 55 des Preßwerkzeuges 5 absinkt, schließt das Organ 41 wieder infolge der einwirkenden Kraft der Kolben-Zylinder-Einheit 45.

Zur Durchführung eines weiteren Preßvorganges wird das Preßwerkzeug 5 in Axialrichtung wieder in das hohle Innere der Förderschnecke 2 zurückgefahren und die Verdichtungselemente 32 mit ihren Schwertern 33 werden in Radialrichtung nach außen verschwenkt. Nun werden weitere Materialien 11 durch die Förderschnecke 2 in den nun wieder freien Vorpreßraum 30 gefördert und der zuvor beschriebene Vexdichtungszyklus läuft erneut ab.

Während des Betriebes der Vorrichtung 1 kann die Förderschnecke 2 taktweise oder alternativ auch durchgehend gedreht werden. Wenn sie taktweise gedreht wird, fördert sie jeweils bei freiem Vorpreßraum 30 Materialien 11 in den Vorpreßraum 30 hinein. Bei einem kontinuierlichen Drehen der Förderschnecke 2 fördert diese die Materialien 11 stetig in Förderrichtung weiter, wobei bei freiem Vorpreßraum 30 die Materialien unmittelbar in den Vorpreßraum 30 gefördert werden, während bei nach innen verschwenkten Schwertern 33 und im Vorpreßraum 30 befindlichen Preßwerkzeug 5 die Materialien zunächst am in Förderrichtung rechts befindlichen Ende der Förderschnecke 2 in einem gewissen Maß vorverdichtet werden. Sobald dann der Vorpreßraum 30 wieder frei ist, gelangen die durch die Förderschnecke 2 in einem gewissen Maße schon vorverdichteten Materialien in den Vorpreßraum 30 hinein.

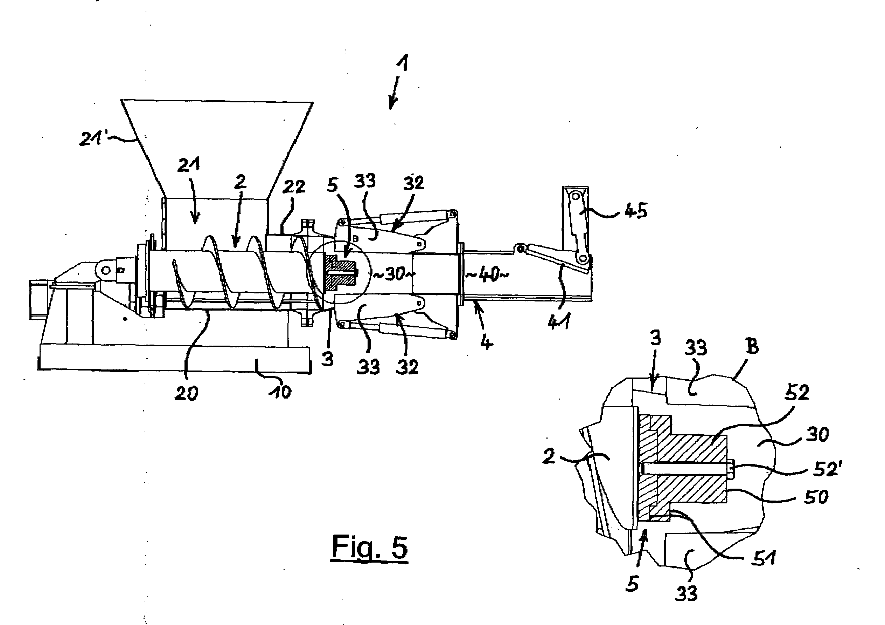

Figur 5 zeigt ebenfalls im Längsschnitt eine geänderte Ausführung der Vorrichtung 1 gemäß den Figuren 1 bis 4. Die Änderung besteht bei dem Beispiel der Vorrichtung 1 gemäß der Figur 5 darin, daß das Preßwerkzeug 5 mehrteilig ausgeführt ist. In ihren sonstigen Einzelteilen entspricht die Vorrichtung 1 gemäß Figur 5 der bereite zuvor beschriebenen Vorrichtung 1 gemäß den Figuren 1 bis 4.

In dem rechts in Figur 5 gezeigten vergrößerten Detail B ist der mehrteilige Aufbau des Preßwerkzeugs 5 deutlich erkennbar. Ganz links in dem Detail B ist das in Förderrichtung gesehen hintere Ende der Förderschnecke 2 erkennbar. Aus dieser ragt das Preßwerkzeug 5 in Axialrichtung nach rechts, d.h. in Förderrichtung, hervor. Über eine Schraubverbindung 52' ist an dem Preßwerkzeug 5 ein lösbarer, auswechselbarer Preßwerkzeugteil 52 angebracht. Dieser Preßwerkzeugteil 52 hat eine Stirnfläche 50, die mit einer Stufe 51 ausgebildet ist. Auch das eigentliche Preßwerkzeug 5 besitzt eine Stufe 51, die hier zur Zentrierung des lösbaren Preßwerkzeugteils 52 dient. Die Stufe am Preßwerkzeugteil 52 dient zur Erleichterung des Preßvorganges, insbesondere beim Übergang des in Axial-richtung ausfahrenden Preßwerkzeuges 5 aus dem Vorpreßraum 30 in den Preßkanal 40.

Oberhalb und unterhalb des Preßwerkzeugteils 52 sind noch zwei von den insgesamt vier Schwertern 33 teilweise sichtbar, die sich hier in ihrer radial nach innen verschwenkten Stellung befinden, in der die radial inneren Kanten der Schwerter 33 nahe dem Außenumfang des Preßwerkzeugs 5 liegen.

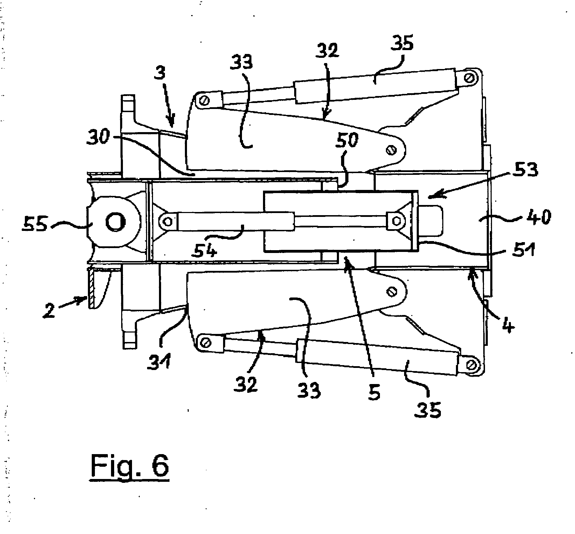

Figur 6 zeigt in vergrößerter Darstellung das Zwischenstück 3 mit dem darin befindlichen Preßwerkzeug 5 im Längsschnitt. Das Zwischenstück 3 mit seinen Verdichtungselementen 32 entspricht dabei der schon zuvor beschriebenen Ausführung.

Neu ist bei der Ausführung gemäß Figur 6, daß dem Preßwerkzeug 5 ein relativ dazu in Axialrichtung verfahrbares Hilfswerkzeug 53 zugeordnet ist.

Wie oben schon beschrieben, ist das Preßwerkzeug 5 kolbenartig ausgebildet und in Axialrichtung relativ zur hohlen Förderschnecke 2 verfahrbar. Bei der Ausführung gemäß Figur 6 ist in dem in Förderrichtung, d.h. gemäß Figur 6 rechte liegenden Bereich des Preßwerkzeugs 5 das ebenfalls kolbenartig ausgebildete Hilfswerkzeug 53 angeordnet und geführt. Das Hilfswerkzeug 53 ist mittels eines eigenen Kraftantriebes 54, hier eine Kolben-zylinder-Einheit, in Axialrichtung relativ zum übrigen Preßwerkzeug 5 verfahrbar. Dazu bildet die Stirnfläche 50 des Preßwerkzeugs 5 eine Führung, durch die das in seinem Durchmesser kleiner als das Preßwerkzeug 5 an sich ausgeführte Hilfswerkzeug hindurch bewegbar ist.

Die Stirnseite des Hilfswerkzeugs 53 ist mit einer Stufe 51 ausgebildet, um den Preßvorgang, wie oben schon erläutert, zu erleichtern. Da auch das Hilfswerkzeug 53 in seinem Durchmesser kleiner ist als das Preßwerkzeug 5 an sich, ergeben sich hier insgesamt zwei Stufen am Preßwerkzeug 5, die zur Erleichterung des Preßvorganges und damit zur Verminderung der erforderlichen Kraftspitzen der Betätigung des Preßwerkzeugs 5 dienen. Zudem kann das Hilfswerkzeug 53 dazu genutzt werden, eventuelle Verstopfungen am Übergang vom Vorpreßraum 30 in den preßkanal 40 zunächst durch alleiniges Ausfahren des Hilfswerkzeugs 53 zu beheben, um danach dann den eigentlichen Preßvorgang mit wieder zurückgefahrenem Hilfswerkzeug 53 durch Ausfahren des Preßwerkzeugs 5 insgesamt mittels dessen Kraftantrieb 55 zu bewirken.

Ähnlich wie bei dem lösbaren Preßwerkzeugsteil 52 gemäß Figur 5 kann auch bei der Ausführung gemäß Figur 6 vorgesehen sein, daß ein Teil des Hilfswerkzeugs 53 oder das Hilfswerkzeugs 53 insgesamt austauschbar ist, um das Preßwerkzeug 5 insgesamt an unterschiedliche zu verdichtende Materialien flexibel anpassen können.

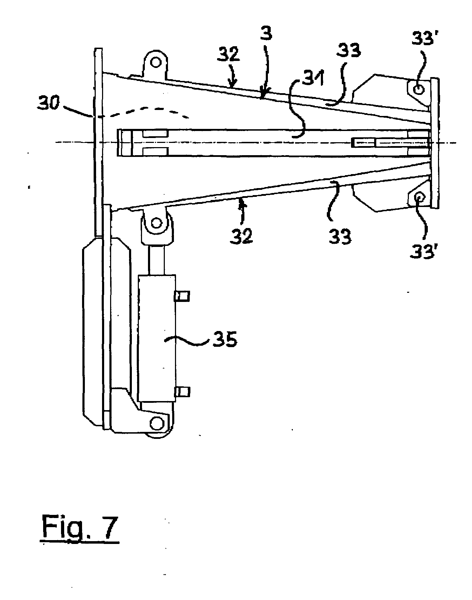

Figur 7 zeigt eine geänderte Ausführung des Zwischenstücks 3 in Seitenansicht. Auch hier ist das Zwischenstück 3 in Förderrichtung gesehen, d. h. gemäß Figur 7 von links nach recht konisch, wobei sich der Durchmesser von links nach rechts vom Durchmesser des hier nicht dargestellten Schneckenrohrs auf den kleineren Durchmesser des nach rechts folgenden, ebenfalls nicht dargestellten Preßrohrs verringert.

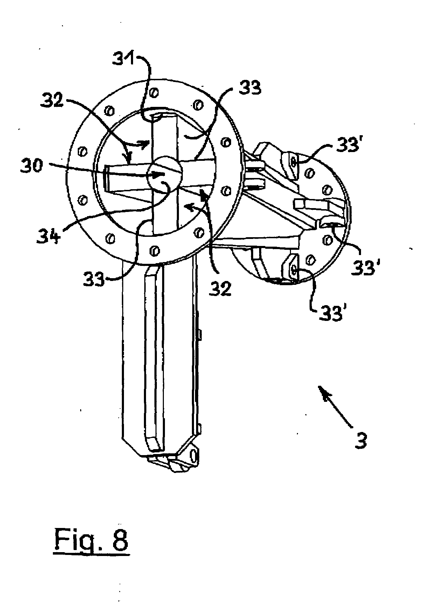

Auch dem Zwischenstück 3 gemäß Figur 7 sind gleichmäßig über den Umfang verteilt vier Verdichtungselemente 33 zugeordnet. Die Anzahl der Verdichtungselemente 32 kann selbstverständlich auch kleiner oder größer als vier sein. Die Verdichtungselemente 32 sind auch hier in Form von Schwertern 33 ausgeführt, wobei jedes Schwert in einem rechts angeordneten Schwenklager 33' in Radialrichtung verschwenkbar ist. Für jedes Schwert 33 ist im Zwischenstück 3 ein passender Schlitz 31 ausgespart, durch den hindurch die Schwerter 33 in Radialrichtung in das Innere des Zwischenstücks 3, d.h. in den Vorpreßraum 30, hinein und aus diesem heraus bewegt werden können. Dazu ist jedem Schwert 33 je ein eigener Kraftantrieb 35 in Form der in Figur 7 nur einmal dargestellten Kolben-Zylinder-Einheiten 35 zugeordnet. Während bei den zuvor beschriebenen Beispielen gemäß den Figuren 1 bis 6 die Kraftantriebe 35 annähernd parallel zur Axialrichtung des zwischenstücks 3 angeordnet sind, sind die Kraftantriebe 35 bei dem Zwischenstück gemäß Figur 3 in Radialrichtung angeordnet, wodurch sich eine verbesserte Kraftübersetzung beim radialen Vorpressen von im Vorpreßraum 30 im Inneren des Zwischenstücks 3 befindlichen Materialien ergibt. Die Bauweise wird dadurch allerdings in Radialrichtung etwas größer. Unterschiedlich zu den vorher erläuterten Beispielen ist außerdem, daß bei dem Beispiel nach Figur 7 und 8 die Schwerter 33 eine größere Materialstärke haben, also dicker ausgeführt sind. Hierdurch haben die radial nach innen weisenden Kanten der Schwerter 33 eine größere Fläche, was das radiale Vorverdichten von kleinteiligeren, z.B. krümeligen, Materialien oder von Materialien mit Bestandteilen geringer Länge, erleichtert und verbessert.

Figur 8 zeigt das Zwischenstück 3 aus Figur 7 nun in einer perspektivischen Ansicht, wobei der Blick des Betrachters auf die im Durchmesser größere, dem hier nicht dargestellten Schneckenrohr 20 zugewandte Stirnseite des Zwischenstücks 3 fällt. In Figur 8 sind ebenso wie in Figur 7 die die Verdichtungselemente 32 bildenden Schwerter 33 in ihre radial innere Endposition verschwenkt. In dieser radial inneren Endposition bilden die radial inneren Kanten der Schwerter 33 eine geschlossene Innenkontur 34, die zylindrisch oder zuminderst angenähert zylindrisch ist und die außerdem der zylindrischen Innenkontur des in Förderrichtung nachfolgenden Preßkanals 40 im wesentlichen entspricht. Hierdurch wird insbesondere erreicht, daß der Kraftaufwand für das Verschieben des im Vorpreßraum 30 in Radialrichtung nach innen durch die Schwerter 33 vorverdichteten Materials in Richtung zum Preßkanal 40 mit einem geringeren Widerstand erfolgt, was den Kraftbedarf für das Verfahren des Preßwerkzeugs 5 niedrig hält.

Im Hintergrund der Figur 8 liegt das dem Preßkanal 40 zugewandte Ende des Zwischenstücks 3, an dem die Schwenklager 33' für die Schwerter 33 angeordnet sind.

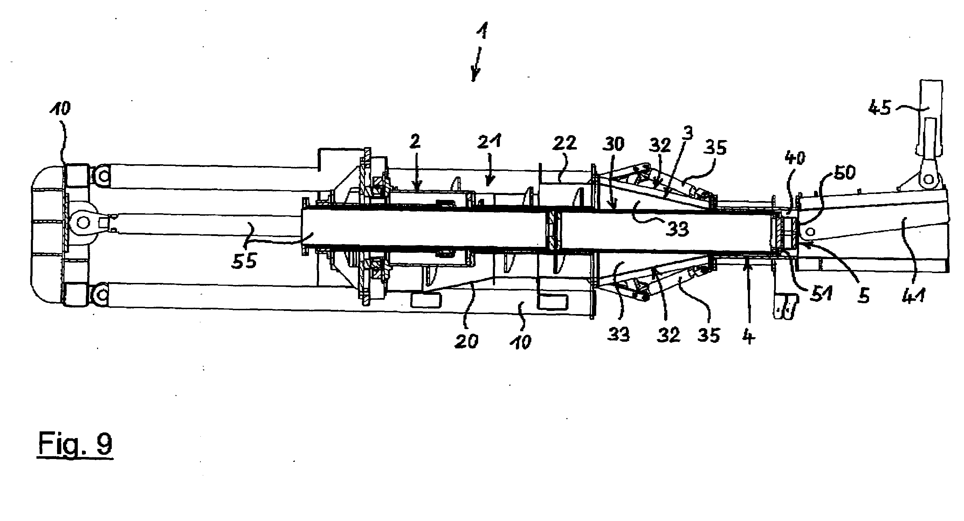

Figur 9 zeigt eine Ausführung der Vorrichtung 1, bei der das Preßwerkzeug 5 einen besonders langen Verfahrweg oder Hub aufweist. Aufgrund des großen Hubes des Preßwerkzeuges 5 muß dessen Kraftantrieb 55 entsprechend lang ausgebildet werden, wodurch sich das Preßwerkzeug 5 mit seinem Kraftantrieb 55 über eine axiale Länge erstreckt, die größer ist als die axiale Länger der Förderschnecke 2. Damit ragt das Preßwerkzeug 5 mit seinem Kraftantrieb 55 in Axialrichtung nach linke aus dem linken Ende der Förderschnecke 2 heraus. Im zurückgefahrenen Zustand, d. h. in einem so weit wie möglich nach links in Figur 9 verfahrenden Zustand, liegt das Preßwerkzeug 5 mit seiner Stirnseite 50 bündig mit dem rechten Stirnende der Förderschnecke 2. In diesem Zustand kann auch bei der Vorrichtung 1 gemäß Figur 9 die rotierende Förderschnecke 2 zu verdichtende Materialien 11 aus dem Eingabebereich 21 in den hier ebenfalls in einem konischen Zwischenstück 3 ausgebildeten Vorpreßraum 30 fördern. Dem Zwischenstück 3 sind auch hier vier in Radialrichtung verstellbare verdichtungselemente 32 in Form von Schwertern 33 zugeordnet, deren Funktion weiter oben schon erläutert wurde.

An das Zwischenstück 3 schließt sich auch hier das Preßrohr 4 mit dem Preßkanal 40 an, dessen rechtes, d.h. in Förderrichtung hinteres Ende mit dem verstellbaren Organ 41 in seinem Querschnitt veränderbar ist. Zum Verstellen des Organs 41 dient auch hier eine Kolben-Zylinder-Einheit 45.

In der in Figur 9 gezeigten ausgefahrenen Stellung des Preßwerkzeugs 5 liegt dessen Stirnseite 50 im Preßkanal 40 unmittelbar vor dem verstellbaren Organ 41. Durch diesen langen Verfahrweg oder Hub des Preßwerkzeugs 5 wird vorteilhaft erreicht, daß das Verdichten des zu verdichtenden Materials im Preßkanal 40 auf die Enddichte getrennt ist vom Überführen des im Vorpreßraum 30 durch die Verdichtungselemente 32 in Radialrichtung nach innen vorverdichteten Materials in den Preßkanal 40. Gerade beim Übergang des vorverdichteten Materials aus dem Vorpreßraum 30 in den Preßkanal 40 kann es zu Kraftspitzen beim Kraftbedarf des Kraftantriebes 55 für das Preßwerkzeug 5 kommen, weil Materialien sich zwischen der Stirnseite 50 des Preßwerkzeugs 5 und dem Übergang vom Vorpreßraum 30 zum Preßkanal 40 verklemmen können. Für den Fördervorgang müssen diese eingeklemmten Materialien abgeschert werden, was einen gewissen Kraftbedarf erfordert. Wenn an dieser Stelle gleichzeitig der hohe Kraftbedarf für die Endverdichtung des Materials im Preßkanal 40 schon anfallen würde, könnte das Problem auftreten, daß die vom Kraftantrieb 55 aufbringbare Kraft nicht ausreicht. Durch die Lösung gemäß Figur 9 wird dieses Problem vermieden, weil die Endverdichtung des Materials im Preßkanal 40 erst dann erfolgt, wenn das Preßwerkzeug 5 mit seiner Stirnseite 50 den Übergangsbereich vom Vorpreßraum 30 in den Preßkanal 40 bereits passiert hat. Damit wird der maximale Kraftaufwand begrenzt und die ganze Vorrichtung 1 wird mechanisch entlastet.

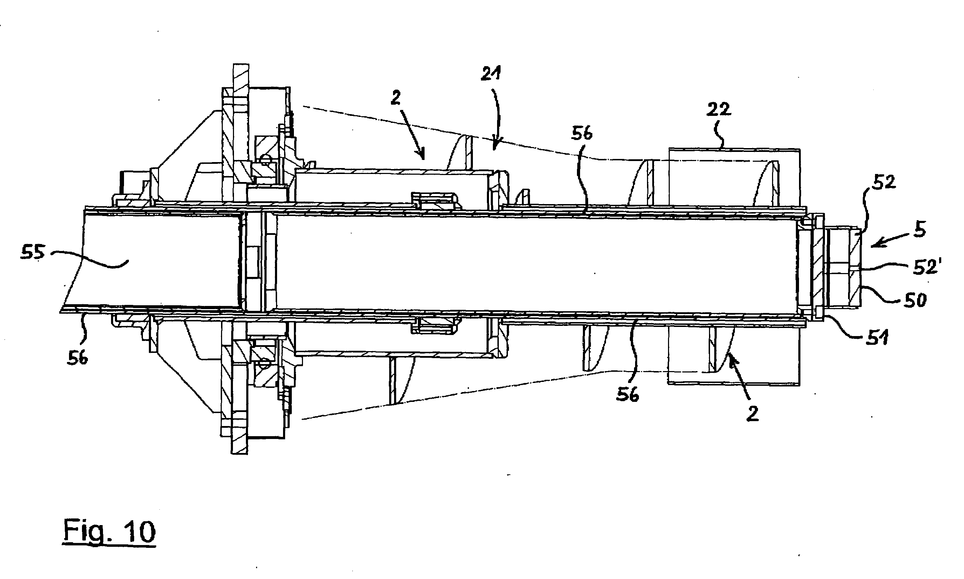

Figur 10 schließlich zeigt einen Ausschnitt aus der Vorrichtung 1 gemäß Figur 9, wobei Figur 10 den Abschnitt der Vorrichtung 1 mit der Förderschnecke 2 zeigt.

Die Förderschnecke 2 ist hier über ihren ersten, d. h. in Figur 10 linken Teil konisch mit einem von linke nach rechts abnehmenden Durchmesser ausgebildet. Oben in Figur 10 befindet sich der Eingabebereich 21, durch den zu verdichtende Materialien der Förderschnecke 2 zugeführt werden. Unterseitig (in Figur 10 nicht dargestellt) sowie nach rechte hin liegt die Förderschnecke 2 in ihrem Schneckenrohr, daß nach rechts in einen geschlossenen Abschnitt 22 übergeht.

Im Unterschied zu den Ausführungen der Vorrichtung 1 gemäß den Figuren 1 bis 8 ist bei dem Beispiel nach Figur 10 die drehantreibbare Förderschnecke 2 auf einem nicht drehbaren, fest in der Vorrichtung 1 gelagerten Rohr 56 angeordnet. Im Inneren dieses nicht drehbaren Rohres 56 wiederum liegt das Preßwerkzeug 5 mit seinem dazugehörigen Kraftantrieb 55 und ist relativ zu dem nicht drehbaren Rohr 56 in Axialrichtung verfahrbar. Hiermit wird erreicht, daß zwischen dem Preßwerkzeug 5 und dessen Kraftantrieb 55 im Betrieb der Vorrichtung nur eine axiale Relativbewegung und damit nur eine relativ geringe Reibung auftritt, während eine rotierende Relativbewegung zwischen der Förderschnecke 2 und dem Preßwerkzeug 5 mit seinem Kraftantrieb 55 hier nicht mehr vorliegt . Dieses dient einer Verschleißverminderung und damit einer längeren störungsfreien Betriebszeit der Vorrichtung 1.

Auch bei dem Beispiel gemäß Figur 10 ist das Preßwerkzeug 5 zweiteilig ausgeführt, wobei ein lösbarer Preßwerkzeugteil 52 auch hier mittels einer Schraubverbindung 52' mit dem übrigen Preßwerkzeug 5 verbunden ist. Ebenfalls ist auch hier eine Stufe 51 vorgesehen, die in oben schon beschriebener Art und Weise den Preßvorgang erleichtert. Da die Teile des Preßwerkzeuges 5 miteinander verschraubt sind, ist ein problemloser und schneller Austausch bei Änderungen des zu verdichtenden Materials oder bei Schäden oder Verschleiß möglich.

## Patentansprüche

1. Verfahren zum Verdichten von Materialien (11), insbesondere recycelfähigen Restotoffen,
**gekennzeichnet durch**
die folgenden Verfahrensschritte:
a) das zu verdichtende Material (11) wird unter einer ersten Vorverdichtung in einen Vorverdichtungsraum gefördert,
b) das Material (11) wird im Vorverdichtungsraum radial in Richtung von außen nach innen weiter vorverdichtet,
c) das vorverdichtete Material (11) wird in axialer Richtung in einen Endverdichtungsraum gefördert,
d) das vorverdichtete Material (11) wird im Endverdichtungsraum in axialer Richtung endverdichtet und
e) das endverdichtete Material (11) wird aus dem Endverdichtungsraum ausgetragen.

2. Vorrichtung (1) zum Verdichten von Materialien (11), insbesondere recycelfähigen Reststoffen, insbesondere zur Durchführung des Verfahrens nach Anspruch 1, mit einer drehantreibbaren, in einem Schneckenrohr (20) gelagerten hohlen Förderschnecke (2), wobei das Schneckenrohr (20) einen offenen Eingabebereich (21) für zu verdichtende Materialien (11) und in Förderrichtung daran anschließend einen geschlossenen Schneckenrohrabschnitt (22) aufweist, wobei ein in Förderrichtung hinter dem Schneckenrohr (20) liegenden Preßkanal (40) vorgesehen ist und wobei in der Förderschnecke (2) ein in deren Längsrichtung verfahrbares, in den Preßkanal (40) und zurück bewegbares Preßwerkzeug (5) geführt ist,
**dadurch gekennzeichnet**
- **daß** zwischen dem Schneckenrohr (20) mit der Förderschnecke (2) und dem Preßkanal (40) ein einen Vorpreßraum (30) begrenzendes Zwischenstück (3) angeordnet ist und
- **daß** am und/oder im Zwischenstück (3) mindestens ein im Sinne einer Verkleinerung des Innendurchmessers des Zwischenstücke (3) verstellbares Verdichtungselement (32) vorgesehen ist.

3. Vorrichtung nach Anspruch 2, **dadurch gekennzeichnet,**
**daß** das Schneckenrohr (20) einen größeren Innendurchmesser als der Preßkanal (40) aufweist und daß für den Übergang vom größeren Innendurchmesser zum kleineren Innendurchmesser das Zwischenstück (3) in seinem Innendurchmesser konisch ausgebildet ist.

4. Vorrichtung nach Anspruch 2 oder 3, **dadurch gekennzeichnet, daß** über den umfang des Zwischenstücks (3) verteilt mehrere Verdichtungselemente (32) vorgesehen sind.

5. Vorrichtung nach Anspruch 4, **dadurch gekennzeichnet, daß** die Verdichtungselemente (32) in ihrer radial äußeren Endstellung auf oder außerhalb der Kontur des Innendurchmessers des Zwischenstücks (3) liegen und in ihrer radial inneren Endstellung eine dem Innendurchmesser des Preßkanals (40) angenäherte oder angepaßte Innenkontur (34) bilden.

6. Vorrichtung nach Anspruch 4 oder 5, **dadurch gekennzeichnet, daß** die verdichtungselemente (32) durch insgesamt radial verstellbare oder radial verschwenkbare Schwerter (33) gebildet sind.

7. Vorrichtung nach Anspruch 6, **dadurch gekennzeichnet, daß** die Schwerter (33) außerhalb des Zwischenstücks (3) gelagert und durch formangepaßte Schlitze (31) im Mantel des Zwischenstücks (3) hindurch bewegbar sind.

8. Vorrichtung nach einem der Ansprüche 2 bis 7, **dadurch gekennzeichnet, daß** das mindestens eine Verdichtungselement (32) durch (je) einen individuellen oder durch einen gemeinsamen, für mehrere Verdichtungselemente vorgesehenen Kraftantrieb (35) verstellbar ist.

9. Vorrichtung nach einem der Ansprüche 2 bis 8, **dadurch gekennzeichnet, daß** die Länge des Zwischenstücks (3) und des Preßkanals (40) und der Hub des Preßwerkzeugs (5) so aufeinander abgestimmt sind,
daß ein erster Hubabschnitt des Preßwerkzeuges (5) in wesentlichen eine Verschiebung von vorverdichtetem Material (11) aus dem Vorpreßraum (30) in den Preßkanal (40) bewirkt und daß erst ein zweiter, im Preßkanal (40) liegender Hubabschnitt des Preßwerkzeuges (5) im wesentlichen eine Materialendverdich tung im Preßkanal (40) und ein Ausstoßen von endverdichtetem Material (11) aus dem Preßkanal (40) bewirkt.

10. Vorrichtung nach einem der Ansprüche 2 bis 9, **dadurch gekennzeichnet, daß** das Preßwerkzeug (5) kolbenartig ausgebildet ist und durch einen in und/oder axial außerhalb der hohlen Förderschnecke (2) liegenden Kraftantrieb (55) verfahrbar ist.

11. Vorrichtung nach einem der Ansprüche 2 bis 10, **dadurch gekennzeichnet, daß** in der hohlen drehbaren Förderschnecke (2) ein nichtdrehbares Rohr (56) angeordnet ist und daß das Preßwerkzeug (5) in dem Rohr (56) geführt ist.

12. Vorrichtung nach einem der Ansprüche 2 bis 11, **dadurch gekennzeichnet, daß** das Preßwerkzeug (5) mit einer dem zu verdichtenden Material (11) zugewandten Stirnfläche (50) ausgebildet ist, die wenigstens eine konzentrische, radial von außen nach innen ansteigende Stufe (51) aufweist.

13. Vorrichtung nach einem der Ansprüche 2 bis 12, **dadurch gekennzeichnet, daß** zumindest ein dem zu verdichtenden Material (11) zugewandter Preßwerkzeugteil (52) mit dem übrigen Preßwerkzeug (5) lösbar verbunden und austauschbar ist.

14. Vorrichtung nach einem der Ansprüche 2 bis 13, **dadurch gekennzeichnet, daß** das Preßwerkzeug (5) mit einem Hilfswerkzeug (53) ausgestattet ist, das relativ zum übrigen Preßwerkzeug (5) aus diesem heraus in Förderrichtung und zurück verfahrbar ist.

15. Vorrichtung nach Anspruch 14, **dadurch gekennzeichnet, daß** das Hilfswerkzeug (53) ein konzentrisch im Preßwerkzeug (5) angeordneter und geführter, mit einem eigenen Kraftantrieb (54) ausgestatteter Kolben ist, dessen Außendurchmesser kleiner ist als der Außendurchmeeser des Preßwerkzeuges (5).

16. Vorrichtung nach einem der Ansprüche 2 bis 15, **dadurch gekennzeichnet, daß** in Förderrichtung gesehen am Ende des Preßkanals (40) ein verstellbares Organ (41) angeordnet ist, mit dem der Querschnitt des Preßkanals (40) wahlweise verkleinerbar oder absperrbar oder freigebbar ist.
